# DEMANDE DE BREVET EUROPEEN

(11) **EP 1 438 899 A1**
(43) Date de publication de la demande: **21.07.2004**
(21) Numéro de dépôt: 04290120.7
(22) Date de dépôt: 16.01.2004
(51) Int. Cl.: A23G 3/00

(54) **Procédé de fabrication de poudre de nougat ainsi que poudre de nougat obtenue par la mise en oevre de ce procédé**

(30) Priorité: 17.01.2003 FR 0300494
(71) Demandeur: Dumas, 34120 Nezignan-L'Eveque (FR)
(72) Inventeur: Hedri, Hassine, 34980Saint Gely du Fesc (FR)
(74) Mandataire: Cabinet HERRBURGER

(57) **Abrégé**

Procédé de fabrication d'une poudre de nougat, caractérisé par la mise en oeuvre des étapes suivantes :
- on introduit du nougat dur éventuellement additionné d'amandes blanchies dans une enceinte de broyage, à température ambiante ;
- on soumet ce nougat à un prébroyage à température essentiellement constante jusqu'à obtention d'un mélange ayant une granulométrie homogène ;
- on laisse monter la température de l'enceinte jusqu'à 40 à 50°C tout en poursuivant le broyage de façon à obtenir une pâte de nougat ;
- on refroidit rapidement l'enceinte jusqu'à une température de l'ordre de 2 à 5°C ;
- on poursuit le broyage en maintenant une température basse jusqu'à l'obtention d'une pâte ayant une granulométrie de l'ordre de 200 µ ; et
- on transfère la pâte de nougat encore froide dans un broyeur à cylindres coopérant avec un générateur de frigories dans lequel on lui fait subir une étape d'affinage en contrôlant sa température de façon à obtenir une poudre de nougat.

## Description

La présente invention concerne un procédé de fabrication d'un produit industriel nouveau à savoir une poudre de nougat aromatisante.

Le nougat constitue une friandise traditionnelle qui est apparue en Provence dès le Moyen Age et a conquis l'Ardèche et la région de Montélimar au XVI^{ème} siècle

Cette friandise qui se présente sous la forme de bâtonnets est classiquement constituée d'une part d'une pâte de base de consistance dure ou tendre renfermant des matières sucrantes et du blanc d'oeufs et d'autre part d'une garniture renfermant des fruits en particulier des fruits secs (amandes, noisettes, pistaches, ...) entiers ou en morceaux.

On peut distinguer différents types de nougats (tendres ou durs, noirs ou blancs, ...) composés d'ingrédients variables en fonction de leur origine (Provence, Ardèche, ...).

Parmi ces différents nougats, le nougat de Montélimar jouit d'une bonne réputation.

Pour pouvoir bénéficier de la dénomination « Nougat de Montélimar », un nougat doit avoir une composition satisfaisant à un code d'usage réglementaire.

La dénomination « Nougat de Montélimar » est en effet réservée à des nougats :
- dont la pâte de base est aérée au moyen d'albumine d'oeufs de poules et/ou de blancs d'oeufs de poules,
- dont la garniture représente au minimum 30 % en poids du produit fini et est composée d'amandes douces d'amandiers émondées et grillées et éventuellement de pistaches, à l'exclusion de tout autre ingrédient, et
- dont les matières sucrantes doivent contenir au minimum 25 % en poids de miel, l'emploi d'un renforçateur d'arôme de miel étant interdit.

Les fabricants de nougat aspirent à recycler et à valoriser leurs chutes.

Dans ce but, ils proposent des pâtes de nougat qui sont fabriquées par un procédé consistant schématiquement :
- dans une première étape à concasser des morceaux de nougat correspondant à des chutes de fabrication de façon à obtenir des brisures de nougat, et
- dans une seconde étape à broyer très finement ces brisures de nougat avec des amandes ou des noisettes de façon à obtenir la pâte de nougat.

Ces pâtes de nougat sont ensuite vendues à des industriels spécialisés en particulier dans la fabrication de glaces et de produits surgelés qui les incorporent à des préparations diverses.

Les pâtes de nougat actuellement proposées sur le marché ne donnent toutefois pas entière satisfaction tant d'un point de vue économique que d'un point de vue purement gustatif.

En effet, leur procédé de fabrication est long et coûteux en énergie compte tenu notamment de l'obligation d'utiliser un matériel de broyage particulier et d'ajouter des ingrédients, tels que des amandes ou des noisettes en cours de broyage, voire de reconstituer la formule à la fin de celui-ci.

De plus, ce procédé ne peut pas être directement appliqué à tous les types de nougat, en particulier à des nougats très riches en miel tels que des chutes de nougat de Montélimar compte tenu du caractère mou et collant du miel qui entraîne un recollage immédiat des brisures.

En outre les pâtes de nougat ont souvent une granulométrie peu homogène et des propriétés organoleptiques contestables du fait d'une note exagérément forte en noisettes ou en amandes couvrant partiellement la note miel qui est très appréciée par les consommateurs.

Pour remédier à ces inconvénients on a déjà proposé selon le document non publié FR-02 12 228 un procédé permettant la valorisation des chutes de tous les types de nougat dur, y compris le nougat de Montélimar, dont la mise en oeuvre est nettement plus rapide que celle des procédés traditionnels, et qui permet d'obtenir une pâte de nougat ayant des qualités gustatives donnant toutes satisfactions aux consommateurs, tout en respectant l'intégralité des normes HACCP en vigueur.

Selon l'invention on a eu l'idée de proposer un procédé permettant d'obtenir, non plus une pâte de nougat, mais une poudre de nougat aromatisante.

Ce procédé est caractérisé par la mise en oeuvre des étapes suivantes :
- on introduit du nougat dur éventuellement additionné d'amandes blanchies dans une enceinte de broyage à température ambiante ;
- on soumet ce nougat à un prébroyage à température essentiellement constante jusqu'à obtention d'un mélange ayant une granulométrie homogène ;
- on laisse la température de l'enceinte atteindre naturellement 40 à 50°C tout en poursuivant le broyage de façon à obtenir une pâte de nougat ;
- on refroidit alors rapidement l'enceinte à une température de l'ordre de 2 à 5°C ;
- on poursuit le broyage à basse température jusqu'à l'obtention d'une pâte ayant une granulométrie de l'ordre de 200 µ ;
- on transfère la pâte de nougat encore froide dans un broyeur à cylindres coopérant avec un générateur de frigories dans lequel on lui fait subir une étape d'affinage en contrôlant sa température de façon à obtenir une poudre de nougat.

Il est à noter que l'enceinte de broyage peut avantageusement être constituée par une enceinte en acier inoxydable équipée d'un broyeur à couteaux en respect des normes alimentaires françaises et européennes et de nature en particulier : à respecter les règles sanitaires et les chartes de qualité, et notamment les normes HACCP, à assurer la traçabilité des lots de produits.

Selon l'invention, le traitement dans l'enceinte de broyage peut être mis en oeuvre en moins de 30 minutes et de préférence en environ 25 minutes, ce qui permet d'obtenir une économie d'énergie notable par rapport aux procédés traditionnels de fabrication de pâte de nougat.

Le caractère particulièrement avantageux du procédé conforme à l'invention est principalement lié à l'étape de refroidissement rapide de l'enceinte de broyage de 40/50°C à 2/5°C et au maintien de cette fourchette de température durant la dernière phase de broyage.

Ce refroidissement est effectué en environ 2 minutes sans interruption du broyage qui est poursuivi à basse température pendant environ 5 minutes avant le transfert de la pâte de nougat encore froide dans le broyeur à cylindres.

Ce traitement rapide à basse température permet en effet d'obtenir à partir de toutes les chutes de nougat dur des poudres de nougat ayant une granulométrie et des propriétés organoleptiques satisfaisantes liées notamment à la préservation des arômes du miel.

Il est à noter que la pâte de nougat froide sortant de l'enceinte de broyage peut être transférée directement dans le broyeur à cylindres ou le cas échéant stockée dans un réservoir intermédiaire.

L'invention concerne également un produit industriel nouveau, à savoir une poudre de nougat aromatisante obtenue par la mise en oeuvre du procédé susmentionné.

Cette poudre de nougat est caractérisée en ce qu'elle a une granulométrie inférieure à 200 µ.

Une telle poudre de nougat présente l'avantage d'être plus facile à stocker et à mettre en oeuvre qu'une pâte de nougat, en particulier du fait qu'elle n'entraîne pas de décantation, et en outre de permettre l'utilisation d'emballages recyclables pour son conditionnement.

Les caractéristiques du procédé ainsi que de la poudre de nougat qui font l'objet de l'invention seront décrites plus en détail en se référant aux dessins annexés dans lesquels
- la figure 1 est une vue schématique d'une installation permettant la mise en oeuvre de ce procédé ;
- la figure 2 est une courbe représentative des variations de température à l'intérieur de l'enceinte de broyage.

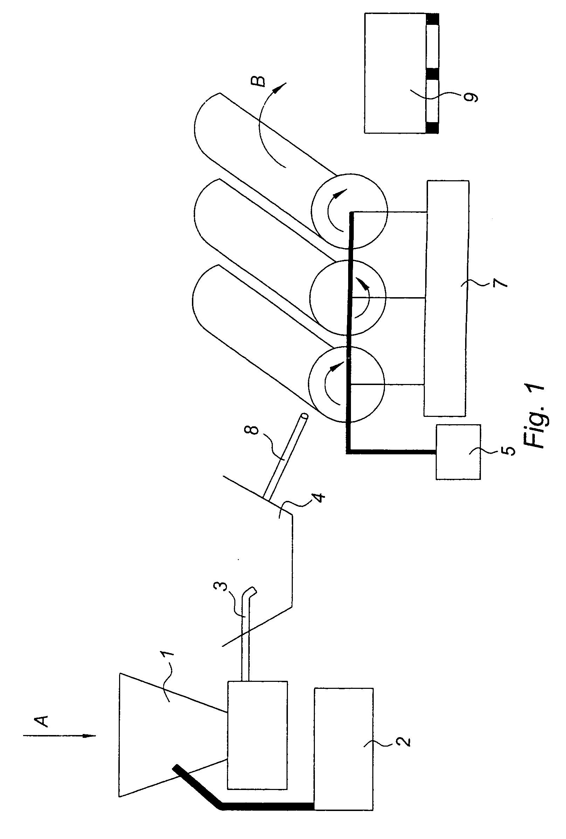

Selon la figure 1, l'installation est constituée par une enceinte de broyage 1 reliée à un générateur de frigories réglable 2.

L'enceinte de broyage 1 est équipée d'une ouverture d'introduction du nougat et le cas échéant des amandes blanchies selon la flèche A ainsi que d'une tubulure de sortie 3 permettant de transférer la pâte obtenue à l'issue du broyage dans l'enceinte 1 dans un réservoir de stockage intermédiaire 4.

A partir de ce réservoir de stockage intermédiaire, cette pâte de nougat encore froide est transférée par une tubulure 8 dans des organes d'affinage constitués par un broyeur à cylindres 7 coopérant avec un générateur de frigories réglable 5 de façon à obtenir une poudre de nougat ayant une granulométrie inférieure à 200 µ.

A la sortie du broyeur à cylindres 7, la poudre de nougat est transférée selon la flèche B dans des organes 9 permettant son conditionnement selon la spécification souhaitée.

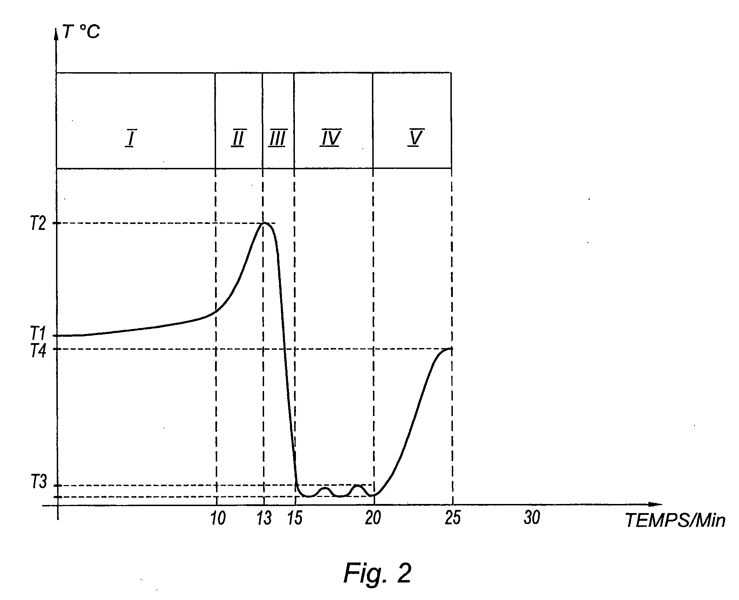

Selon la figure 2, le nougat dur éventuellement additionné d'amandes blanchies est introduit dans l'enceinte de broyage à la température ambiante T1 et est soumis à un prébroyage à température essentiellement constante pendant environ 10 minutes (étape I).

La température interne de l'enceinte de broyage atteint alors naturellement une valeur T2 de l'ordre de 40 à 50°C tandis que le broyage est poursuivi pendant un laps de temps de l'ordre de 3 minutes (étape II).

La température interne de l'enceinte de broyage est alors rapidement abaissée jusqu'à une température T3 de l'ordre de 2 à 5°C en environ 2 minutes, ce sans interrompre le broyage (étape III) par injection contrôlée de frigories.

Le broyage à basse température est poursuivi pendant environ 5 minutes (étape IV) avant le transfert de la pâte de nougat dans le réservoir de stockage intermédiaire puis dans le broyeur à cylindres.

## Revendications

1. Procédé de fabrication d'une poudre de nougat,
**caractérisé par** la mise en oeuvre des étapes suivantes :
- on introduit du nougat dur éventuellement additionné d'amandes blanchies dans une enceinte de broyage, à température ambiante ;
- on soumet ce nougat à un prébroyage à température essentiellement constante jusqu'à obtention d'un mélange ayant une granulométrie homogène ;
- on laisse monter la température de l'enceinte jusqu'à 40 à 50°C tout en poursuivant le broyage de façon à obtenir une pâte de nougat ;
- on refroidit rapidement l'enceinte jusqu'à une température de l'ordre de 2 à 5°C ;
- on poursuit le broyage en maintenant une température basse jusqu'à l'obtention d'une pâte ayant une granulométrie de l'ordre de 200 µ ; et
- on transfère la pâte de nougat encore froide dans un broyeur à cylindres coopérant avec un générateur de frigories dans lequel on lui fait subir une étape d'affinage en contrôlant sa température de façon à obtenir une poudre de nougat.

2. Procédé selon la revendication 1,
**caractérisé en ce que**
la durée du traitement dans l'enceinte de broyage est inférieure à 30 minutes et est de préférence de l'ordre de 25 minutes.

3. Poudre de nougat obtenue par la mise en oeuvre du procédé selon l'une quelconque des revendications 1 et 2,
**caractérisée en ce qu'**
elle a une granulométrie inférieure à 200 µ.
